# EUROPEAN PATENT SPECIFICATION

(11) **EP 3 287 613 B1**
(45) Date of publication and mention of the grant of the patent: **22.12.2021**
(21) Application number: 17173748.9
(22) Date of filing: 31.05.2017
(51) Int. Cl.: F01K 13/02, F01K 7/16, F01K 1/04, F01K 11/02, F01K 13/00

(54) **APPARATUS FOR PREVENTING WINDAGE LOSS OF STEAM TURBINES**
VORRICHTUNG ZUR VERHINDERUNG VON LÜFTUNGSVERLUST VON DAMPFTURBINEN
APPAREIL DE PRÉVENTION DE PERTE DE TOURBILLONNEMENT DE TURBINES À VAPEUR

(30) Priority: 27.06.2016 KR 20160080323
(43) Date of publication of application: 28.02.2018
(73) Proprietor: Doosan Heavy Industries & Construction Co., Ltd., Seongsan-gu Changwon-si, Gyeongsangnam-do 51711 (KR)
(72) Inventor: LEE, Je Young, 48089 Busan (KR); YANG, Seong Jong, 50999 Gyeongsangnam-do (KR); KANG, Sang Wook, 50949 Gyeongsangnam-do (KR); SON, Hyun Woo, 17004 Gyeonggi-do (KR); LEE, Seung Chul, 04427 Seoul (KR)
(74) Representative: BCKIP

(56) References cited:
- DE-C1- 19 823 251
- JP-A- S62 101 809
- JP-A- 2004 169 621
- US-A- 5 018 356
- US-A- 5 490 386
- US-A1- 2015 047 353
- US-A1- 2015 159 514
- US-B1- 6 220 014
- US-B1- 6 301 895

## Description

### BACKGROUND

Exemplary embodiments of the present invention relate to an apparatus for reducing or preventing windage loss of steam turbines for reducing or minimizing damage to a blade caused by a rise in temperature at an outlet stage of a high-pressure turbine due to operation of the steam turbine.

Generally, steam is supplied to a heat supply and storage tank after a high-pressure turbine. When a medium-pressure turbine is started-up for cogeneration in a state in which a condenser is not operated, the high-pressure turbine is rotated and a temperature at an outlet stage of the high-pressure turbine rapidly rises occurs. The rapid rise in temperature at the outlet stage may be referred to as a windage loss phenomenon.

In a case in which the windage phenomenon is continued, a turbine positioned at the last stage of the high-pressure turbine that is heated as described above causes damage to a bucket.

The bucket positioned at the stage corresponds to, for example, a sixth-stage turbine or a seventh-stage turbine among multiple turbines in the high-pressure turbine. When the turbine positioned at the stage is damaged, operation thereof needs to be stopped.

In particular, since when the cogeneration is simultaneously performed, district heating may also be stopped at the same time, a method capable of reducing or minimizing the windage loss for stable operation of the high-pressure turbine and stable cogeneration, is needed.

US 6,220,014 B1 discloses a single shaft combined cycle plant, comprising:
a gas turbine; an exhaust heat recovery boiler for generating steam using exhaust heat discharged from the gas turbine; and a steam turbine driven by steam generated from the exhaust heat recovery boiler, rotors of the gas turbine and rotors of the steam turbine being coupled, and the steam turbine comprising: a high pressure turbine being driven by high pressure steam generated at a superheater of the exhaust heat recovery boiler supplied via a first steam path, and a reheating turbine supplied with and driven by steam that passes through the high pressure turbine, and a second steam path, and is reheated by a reheater of the exhaust heat recovery boiler, with the reheated steam then passing through a third steam path, wherein: separately provided steam supplying means supplies steam to the reheating turbine;
a steam connecting path connects the third steam path and the first steam path; and
discharging means discharges steam supplied from the steam supplying means that flows via the reheating turbine and flows through the second steam path to outside of the second steam path.US 2015/0159514 A1 discloses a system comprising: at least one computing device operably connected to a cooling system for a turbine section of a steam turbine system for controlling a flow rate of cooling fluid supplied to a wheel space of the turbine section by the cooling system, the at least one computing device performing actions including:modeling a sensitivity of a wheel space temperature to a change in the flow rate in the form of a piecewise linear relationship, the piecewise linear relationship including a flooded flow rate above which the wheel space temperature becomes insensitive to increased flow rate; receive a measurement of the flow rate; and periodically modifying the flow rate of the cooling fluid supplied to the wheel space of the turbine section to approximate a minimum flooded flow rate based on the measured flow rate and the modeling.

### BRIEF SUMMARY

An object of the present invention is to provide an apparatus for reducing or preventing windage loss of steam turbines capable of reducing or minimizing damage to a last-stage bucket caused by the windage loss in a high-pressure turbine under a condition that the high-pressure turbine, a medium-pressure turbine, and a heat supply and storage tank are started-up.

In accordance with one aspect of the present invention, there is provided an apparatus having the features of claim 1.

The extension pipe may supply steam at a side of a turbine blade provided in the high-pressure turbine in a state in which the extension pipe is orthogonal to a shaft of the high-pressure turbine.

The extension pipe may have an end formed in a nozzle form.

The extension pipe may supply steam in a rotation direction of the high-pressure turbine.

The extension pipe may include a first extension pipe extending toward a turbine blade in order to supply steam in a rotation direction of the high-pressure turbine, and a second extension pipe positioned opposite to the first extension pipe and extending to supply steam in the rotation direction of the turbine blade.

The apparatus may further include a return pipe of which one end is connected to the outlet stage of the high-pressure turbine and the other end is connected to the tank unit, and through which the steam supplied to the inlet stage of the high-pressure turbine is drained.

The return pipe may include a second control valve controlling an amount of drained steam.

The controller may control pressure of the steam supplied by the steam supplier based on pressure data according to pressure drop between the second-stage turbine and the third-stage turbine.

The steam supplier may further include a pressure controller installed at the extension pipe in order to supply the additional steam supplied to the high-pressure turbine at different pressure by the controller.

Steam drained from the medium-pressure turbine may be stored in a heat supply and storage tank in which heating water for heating is stored.

By way of example but not forming part of the invention, there is provided an apparatus for reducing or preventing windage loss of steam turbines, including: a turbine unit including a high-pressure turbine, a medium-pressure turbine, and a low-pressure turbine; a condenser in which steam passing through the low-pressure turbine is supplied and heat-exchanged; a tank unit in which steam generated at the time of operation of the turbine unit is converted into condensed water after being condensed, and stored; a steam supplier supplying additional steam to an inlet stage and an outlet stage of the high-pressure turbine to reduce or minimize a rapid rise in temperature at an outlet stage of the high-pressure turbine due to speed-up of the medium-pressure turbine under a condition that the condenser is not operated; a sensor sensing the temperature at the outlet stage of the high-pressure turbine and internal pressure; and a controller controlling an amount of steam supplied by the steam supplier so as not to generate damage at the outlet stage by receiving data on the temperature and the pressure sensed by the sensor.

The steam supplier may include a first extension pipe extending toward between a second-stage turbine and a third-stage turbine among turbines configuring the high-pressure turbine, a third extension pipe extending toward the last stage of the high-pressure turbine, and a steam generator supplying steam to the first and third extension pipes.

The steam supplier may further include a first control valve positioned at any extended position of the first and third extension pipes and of which an opening degree is controlled by the controller.

The controller may perform a control to simultaneously supply steam to the first and third extension pipes or to supply the steam to any one of the first extension pipe and the third extension pipe.

When the steam is simultaneously supplied to the first and third extension pipes, the controller may control pressure of the steam supplied to the first extension pipe and pressure of the steam supplied to the third extension pipe to be different from each other.

The apparatus may further include a return pipe of which one end is connected to the outlet stage of the high-pressure turbine and the other end is connected to the tank unit, and through which the steam supplied to the inlet stage of the high-pressure turbine is drained.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a diagram illustrating an apparatus for reducing or preventing windage loss of steam turbines according to a first embodiment of the present invention.
FIG. 2 is a diagram illustrating an example of an extension pipe according to the first embodiment of the present invention.
FIG. 3 is a diagram illustrating another example of an extension pipe according to the first embodiment of the present invention.
FIG. 4 is a block diagram illustrating a controller and a peripheral structure associated with the controller according to the first embodiment of the present invention.
FIG. 5 is a diagram illustrating operation of the apparatus for reducing or preventing windage loss of steam turbines according to the first embodiment of the present invention.
FIG. 6 is a diagram illustrating an apparatus for reducing or preventing windage loss of steam turbines according to an example not forming part of the invention.
FIG. 7 is a diagram illustrating operation of the apparatus for reducing or preventing windage loss of steam turbines according to the example of FIG. 6.
FIG. 8 is a diagram illustrating operation of the apparatus for reducing or preventing windage loss of steam turbines according to example of FIG. 6 and 7.

### DETAILED DESCRIPTION

Exemplary embodiments of the present invention will be described below in more detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art.

An apparatus fore reducing or preventing windage loss of steam turbines according to a first embodiment of the present invention will be described with reference to the drawings.

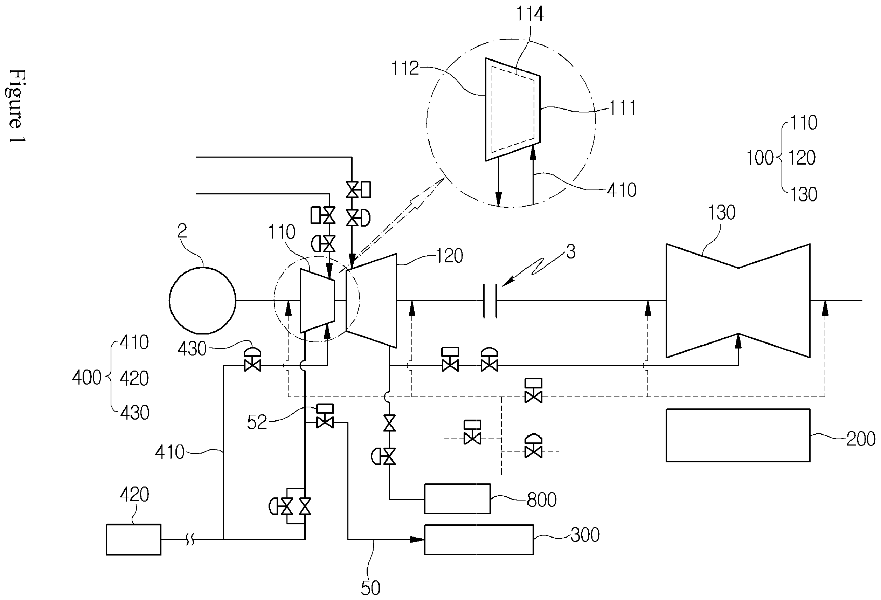

Referring to FIGS. 1 to 4, an apparatus for reducing or preventing windage loss of steam turbines according to the present embodiment is to reduce or minimize damage to a last-stage bucket of a high-pressure turbine 110 caused by the windage loss by supplying additional steam such that a temperature at a specific position does not rapidly rises in a state in which there is no steam in the high-pressure turbine 110 using the steam.

Further, according to the present disclosure, high-temperature steam of which a temperature is decreased by passing through a turbine unit 100 is reused as a heat source for cogeneration, thereby improving energy reuse efficiency.

The apparatus for reducing or preventing windage loss of steam turbines according to the present disclosure includes the turbine unit 100, a condenser 200, a tank unit 300, a steam supplier 400, a sensor 500, and a controller 600.

The turbine unit 100 includes the high-pressure turbine 110, a medium-pressure turbine 120, and a low-pressure turbine 130, and may transfer rotational force to a generator 2 since the generator 2 is connected to a shaft of the high-pressure turbine 110.

The high-pressure turbine 110 includes, for example, a first-stage turbine to n+1-th-stage turbine, for example, a first-stage turbine to a seventh-stage turbine. A clutch 3 controlling connection and disconnection of the rotational force to the low-pressure turbine 130 is installed in the shaft connecting between the medium-pressure turbine 120 and the low-pressure turbine 130.

The condenser 200 is positioned below the low-pressure turbine 130 and has a heat exchange pipe extending and bent at a predetermined length while passing through the condenser 200 multiple times. In the condenser 200, when the steam of the low-pressure turbine 130 is supplied, the steam is changed into medium-temperature steam through heat exchange.

The tank unit 300 which is a tank storing steam discharged from an outlet stage 112 of the high-pressure turbine 110, may have a predetermined size and the predetermined number.

In the tank unit 300, the steam generated at the time of operation of the high-pressure turbine 110 of the turbine unit 100 is converted into condensed water after being condensed, and stored.

The steam supplier 400 supplies additional steam to an inlet stage 111 of the high-pressure turbine 110 to reduce or minimize a rapid rise in temperature at the outlet stage 112 of the high-pressure turbine 110 due to speed-up of the medium-pressure turbine under a condition that the condenser 200 is not operated.

The steam supplier 400 includes an extension pipe 410 extending toward between a second-stage turbine and a third-stage turbine among the turbines of the high-pressure turbine 110, a steam generator 420 supplying steam to the extension pipe 410, and a first control valve 430 positioned at any extended position of the extension pipe 410 and of which an opening degree is controlled by the controller 600.

The extension pipe 410 extends between the second-stage turbine and the third-stage turbine while passing through an inspection hole pre-formed to inspect between the second-stage turbine and the third-stage turbine in an outer casing forming an appearance of the high-pressure turbine 110.

The extension pipe 410 is a pipe or a tube having a general circular cross-section and includes a heat insulation pad for heat insulation at an outer circumferential surface to reduce or minimize heat loss, thereby reducing or minimizing heat loss to the outside even when the steam is supplied.

As the steam generator 420, for example, a boiler unit is used to supply steam to the extension pipe 410, and the boiler unit includes a main boiler and an auxiliary boiler. The main boiler supplies steam to the extension pipe 410, and when the main boiler is broken down or malfunctions, the auxiliary boiler is operated, thereby stably supplying the steam to the extension pipe 410.

It is to be noted that the steam generator 420 may also be configured to include a component generating steam other than the above-described boiler unit.

The additional steam is supplied through the extension pipe 410, and thus is moved to the outlet stage 112 at which stagnant high temperature is maintained and then causes flow of fluid to move to a return pipe 50 to be described below together with gas having high-temperature heat energy, thereby reducing or preventing a phenomenon that the temperature at the outlet stage 112 is overheated, and maintaining a circulation state of the steam.

Therefore, a phenomenon that the temperature rapidly rises at the outlet stage 112 of the high-pressure turbine 110 may be reduced or minimized.

The first control valve 430 is provided to control an amount of steam supplied to the high-pressure turbine 110 through the extension pipe 410, and an opening degree thereof is selectively controlled by the controller 600 to be described below.

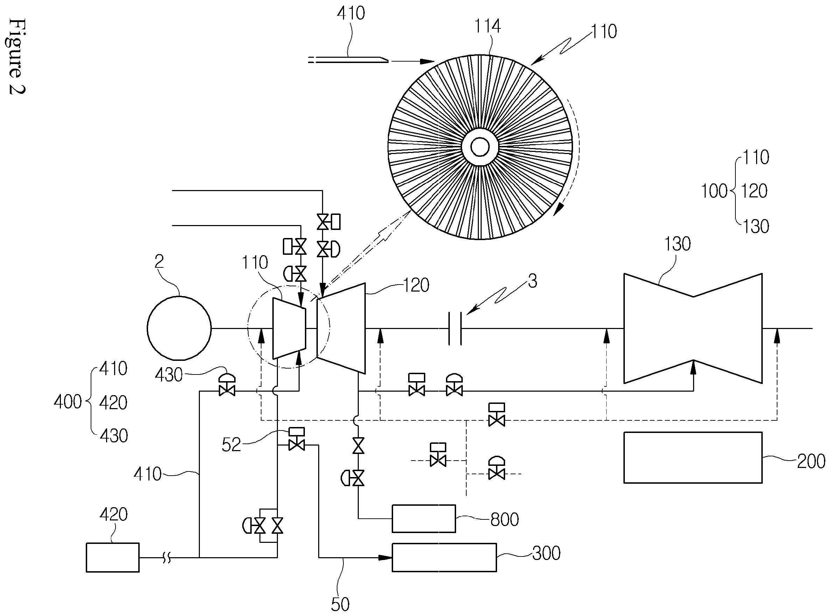

Referring to FIG. 2, the extension pipe 410 according to the present embodiment is disposed to supply steam at a side of a turbine blade 114 provided in the high-pressure turbine 110 in a state in which the extension pipe 410 is orthogonal to the shaft of the high-pressure turbine 110.

The turbine blade 114 rotates in a specific direction. When the high-pressure turbine 110 is rotated in a state in which there is no steam, windage loss phenomenon that the temperature at the outlet stage 112 of the high-pressure turbine 110 is overheated may occur.

According to the present embodiment, the extension pipe 410 extends toward the above-mentioned stage of the high-pressure turbine 110 and an end thereof extends toward a direction in which the turbine blade 114 rotates so that the steam is supplied in the rotation direction of the turbine blade 114 to reduce or minimize the windage loss phenomenon.

The end of the extension pipe 410 extending between the second-stage turbine and the third-stage turbine of the high-pressure turbine 110 may have a nozzle form, and in this case, the nozzle may include a single nozzle or a plurality of nozzles.

In the case in which the extension pipe 410 is configured in the nozzle form, a discharge speed of the steam may be increased, thereby allowing the steam to be supplied toward the second-stage turbine and the third-stage turbine at a high speed.

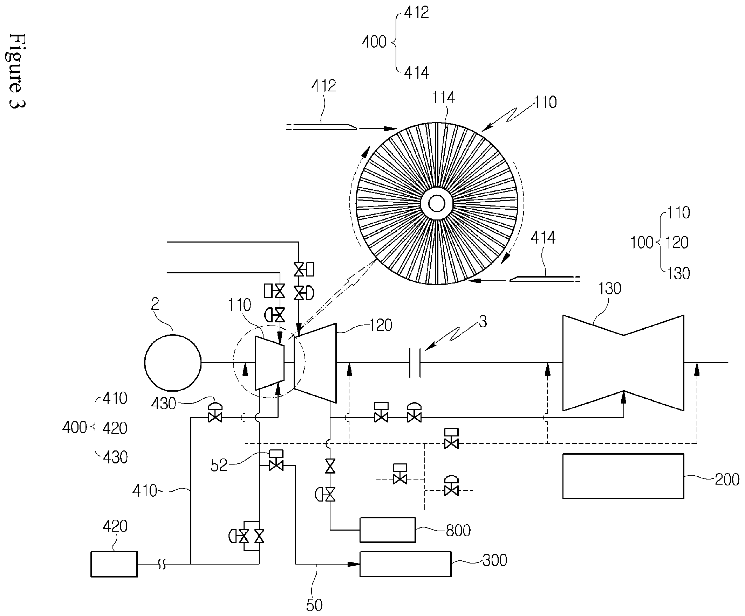

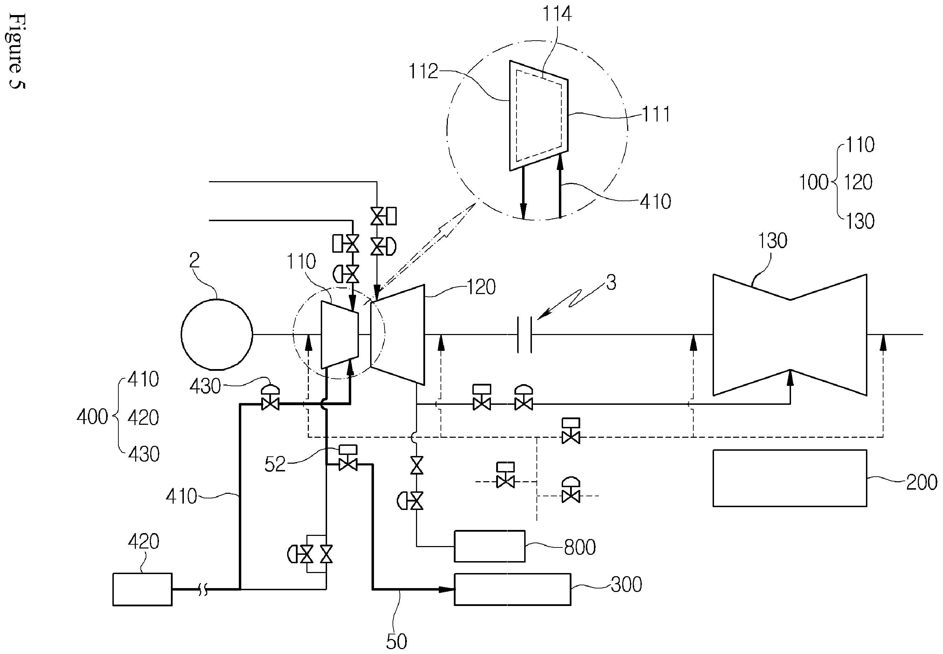

Referring to FIG. 3 or 5, the extension pipe 400 according to the present embodiment may include a first extension pipe 412 and a second extension pipe 414 unlike the above-described embodiment. The first and second extension pipes 412 and 414 are illustrated in order to assist in understanding of the description by way of example, thus are not necessarily limited to the form illustrated in the drawings.

However, disposition thereof may be similar to that illustrated in the drawings, and the number thereof may also be changed.

The state in which there is no steam in the high-pressure turbine 110 may not be maintained by supplying the steam to the turbine blade 114 through the first and second extension pipes 412 and 414.

The first extension pipe 412 extends toward the turbine blade 114 in order to supply the steam in the rotation direction of the high-pressure turbine 110, and the second extension pipe 414 is positioned opposite to the first extension pipe 412 and extends to supply the steam in the rotation direction of the turbine blade 114.

The disposition of the first and second extension pipes 412 and 414 may be variously changed without being limited to the layout illustrated in the drawings. For example, the first extension pipe 412 may extend toward the 12 o'clock direction from the left side and the second extension pipe 414 may extend toward the 6 o'clock direction from the lower right side, based on a front surface of the high-pressure turbine 110.

In this case, the steam sprayed toward the turbine blade 114 from the first extension pipe 412 and the steam sprayed toward the turbine blade 114 from the second extension pipe 414 are supplied respectively in the directions shown by arrows and the turbine blade 114 rotates in a dotted line arrow direction.

Here, in the turbine blade 114, a position where the additional steam is supplied through the first extension pipe 412 and a position where the addition steam is supplied through the second extension pipe 414 are different from each other. However, the additional steam may be easily moved to the outlet stage 112 along an axis direction in the high-pressure turbine 110 and the additional steam moved to the outlet stage of the high-pressure turbine 110 may forcibly move gas of which high temperature is maintained to the outlet stage 112, thereby reducing or preventing a rise in temperature at the outlet stage 112 of the high-pressure turbine 110.

Accordingly, the last-stage bucket may be stably used without being damaged due to windage loss at the outlet stage 112 of the high-pressure turbine 110.

According to the present embodiment, the apparatus for reducing or preventing windage loss of steam turbines includes the return pipe 50 of which one end is connected to the outlet stage 112 of the high-pressure turbine 110 and the other end is connected to the tank unit 300, and through which steam supplied to the inlet stage 111 of the high-pressure turbine 110 is drained.

The return pipe 500 includes a second control valve 52 controlling an amount of drained steam. One return pipe 50 or a plurality of return pipes 50 may be provided, and the number of the return pipe 50 is not particularly limited. Further, the additional steam is mixed and drained together with the high temperature gas moved to the outlet stage 112.

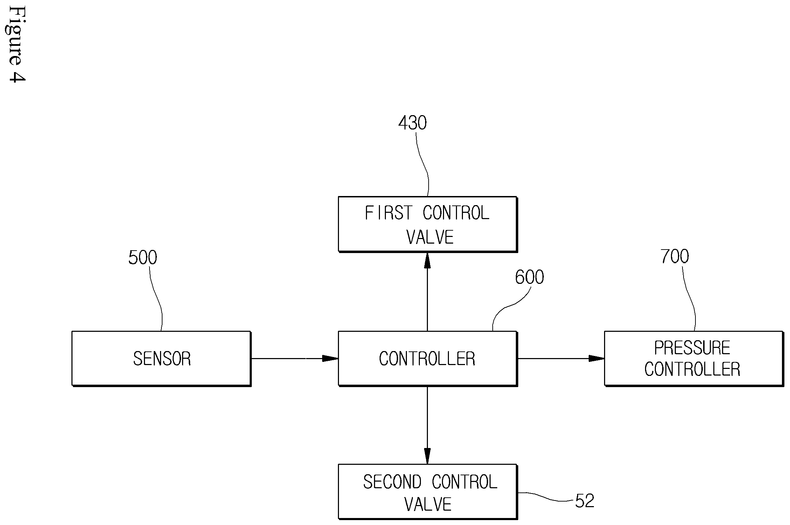

Referring to FIGS. 4 and 5, the sensor 500 according to the present embodiment includes a temperature sensor for sensing the temperature at the outlet stage 112 of the high-pressure turbine 110.

The temperature sensor is not damaged and stably operated under high temperature condition, and a pressure sensor sensing internal pressure is provided together with the temperature sensor.

Data on temperature sensed by the sensor 500 is transmitted to the controller 600, and the controller 600 controls the steam supplier 400.

For example, the controller 600 controls pressure of steam supplied by the steam supplier 400 based on pressure data according to pressure drop between the second-stage turbine and the third-stage turbine.

In the high-pressure turbine 110, as the stage number increases from the first-stage turbine to the n+1-th-stage turbine, the pressure drop occurs, and the controller 600 may perform a control for pressure compensation for additional steam that is additionally supplied according to the pressure drop, such that it is possible to provide steam while maintaining optimal pressure. The steam pressure may be easily controlled as described above by inputting, to the controller 600, the pressure drop according to the stage number from the first-stage turbine to the n+1-th-stage turbine using pressure data values provided to a manufacturer of the turbine in advance.

For example, as the stage number is changed between the second-stage turbine and the third-stage turbine, pressure difference due to the pressure drop is generated between the second-stage turbine and the third-stage turbine. Pressure of the additional steam supplied through the extension pipe 410 may be controlled according to the corresponding stage number of the high-pressure turbine 110 in consideration of variables according to the pressure drop, and the additional steam may be supplied at the controlled pressure, thus the additional steam may easily move to the outlet stage 112.

The steam supplier 400 includes a pressure controller 700 installed at the extension pipe 410 in order to supply the additional steam supplied to the high-pressure turbine at different pressure by the controller 600. The pressure controller 700 may be configured as a separate valve, and the number thereof is not particularly limited. Further, the supply pressure of the additional steam may be easily controlled by the pressure controller 700, thereby minimizing windage loss of the high-pressure turbine 110.

Steam drained from the medium-pressure turbine 120 is stored in a heat supply and storage tank 800 in which heating water for district heating is stored. The heat supply and storage tank 800, which is provided for cogeneration, stores high-temperature steam, and is connected with a separate pipe to supply the high-temperature steam to a district requiring heating.

An apparatus for reducing or preventing windage loss of steam turbines according to a second embodiment of the present disclosure will be described with reference to the drawings.

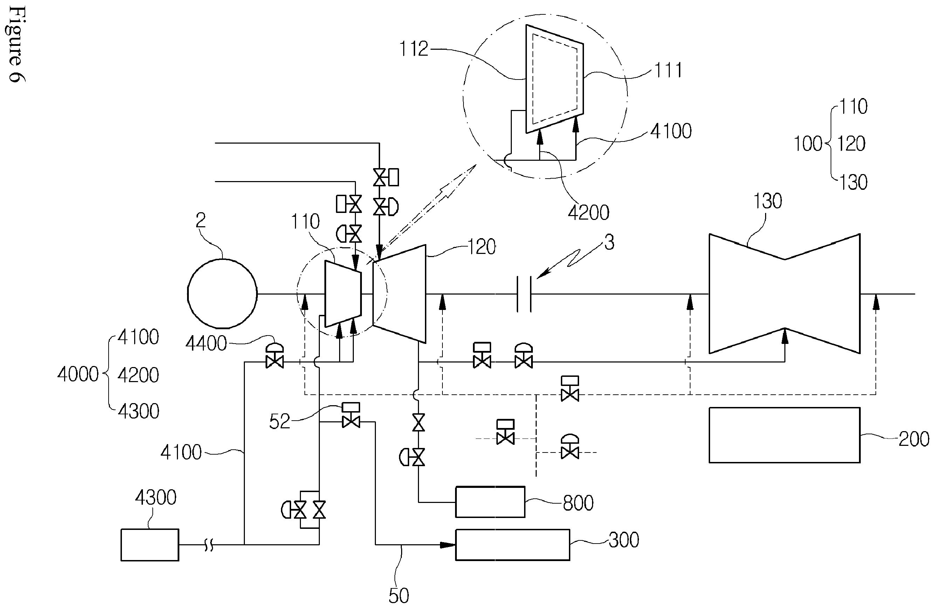

Referring to FIGS. 6 to 8, an apparatus for reducing or preventing windage loss of steam turbines according to an example not forming part of the invention includes a turbine unit 100 including a high-pressure turbine 110, a medium-pressure turbine 120, and a low-pressure turbine 130, a condenser 200 in which steam passing through the low-pressure turbine 130 is supplied and heat-exchanged, a tank unit 300 in which steam generated at the time of operation of the turbine unit 100 is converted into condensed water after being condensed, and stored, a steam supplier 4000 supplying additional steam to an inlet stage 111 and an outlet stage 112 of the high-pressure turbine 110 to minimize a rapid rise in temperature at the outlet stage 112 of the high-pressure turbine 110 due to speed-up of the medium-pressure turbine 120 under a condition that the condenser 200 is not operated, a sensor 500 sensing the temperature at the outlet stage 112 of the high-pressure turbine and internal pressure, and a controller 600 controlling an amount of steam supplied by the steam supplier 4000 so as not to generate damage at the outlet stage 112 by receiving data on the temperature and the pressure sensed by the sensor 500.

The apparatus for reducing or preventing windage loss of steam turbines according to the present embodiment is to reduce or minimize damage to a last-stage bucket of the high-pressure turbine 110 caused by the windage loss by discharging stagnant high temperature gas together with additional steam by supplying the additional steam such that a temperature does not rapidly rises in a state in which there is no steam at the outlet stage of the high-pressure turbine 110, when the turbine unit 100 is operated using high-temperature steam generated in the steam turbine using the steam.

In particular, according to the present embodiment, the steam supplier 4000 extends toward the inlet stage 111 and the outlet stage 112 of the high-pressure turbine 110, respectively, and the additional steam may be supplied to the inlet stage 111 and the outlet stage 112 at the same time by the controller 600 to be described below, or may be selectively supplied to any one of inlet stage 111 and the outlet stage 112.

In this case, the problem caused by the windage loss may be reduced or minimized by selecting supply position of the additional steam based on a temperature state of the outlet stage 112 of the high-pressure turbine 110.

Since main configurations of the present embodiment are similar to those of the aforementioned first embodiment, the steam supplier 4000 having different configuration will be mainly described.

The steam supplier 4000 supplies additional steam to the inlet stage 111 of the high-pressure turbine 110 to minimize a rapid rise in temperature at the outlet stage 112 of the high-pressure turbine 110 due to speed-up of the medium-pressure turbine 120 under a condition that the condenser 200 is not operated.

The steam supplier 400 includes a first extension pipe 4100 extending toward between a second-stage turbine and a third-stage turbine among the turbines configuring the high-pressure turbine 110, a third extension pipe 4200 extending toward the last stage of the high-pressure turbine 110, and a steam generator 4300 supplying steam to the first and third extension pipes 4100 and 4200.

The first and third extension pipes 4100 and 4200 are pipes or tubes having a general circular cross-section and include a heat insulation pad (not illustrated) for heat insulation at an outer circumferential surface to minimize heat loss, thereby reducing or minimizing heat loss to the outside even when the steam is supplied.

The heat insulation pad may reduce or minimize heat loss of the additional steam generated from the steam generator 4300 by blocking the heat loss to the outside when a temperature of the outside air is maintained to be low.

As the steam generator 4300, a boiler unit for supplying steam to the first and third extension pipes 4100 and 4200 is used, and the boiler unit includes a main boiler and an auxiliary boiler.

The first extension pipe 4100 extends toward between the second-stage turbine and the third-stage turbine of the high-pressure turbine 110, and the third extension pipe 4200 extends toward the last-stage turbine of the high-pressure turbine 110 or a turbine of a stage adjacent to the last stage.

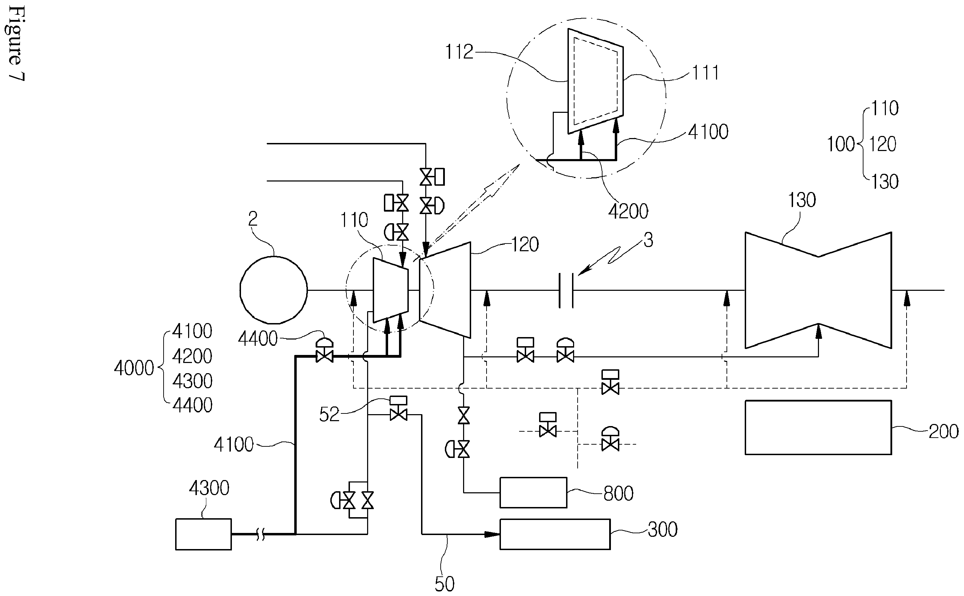

Referring to FIG. 7, the controller 600 according to the example of FIG. 6 may perform a control to simultaneously supply steam to the first and third extension pipes 4100 and 4200 or to supply the steam to any one of the first extension pipe 4100 and the third extension pipe 4200.

When the controller 600 performs a control to simultaneously supply the steam to the first and third extension pipes 4100 and 4200 extending toward the high-pressure turbine 110, a high temperature state around the last-stage bucket of the high-pressure turbine 110 may be changed to a low temperature state in the least amount of time. In this case, a phenomenon that a bucket of the outlet stage 112 of the high-pressure turbine 110 may be reduced or minimized, thereby improving safety and efficiency at the same time.

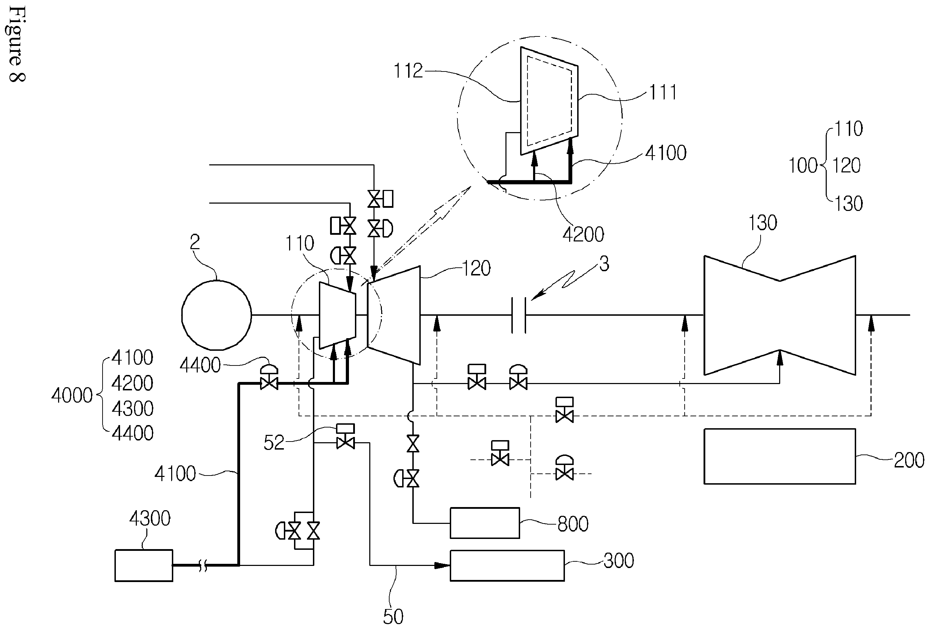

Referring to FIG. 8, when the steam is simultaneously supplied to the first and third extension pipes 4100 and 4200, the controller 600 according to the present embodiment may control pressure of the steam supplied to the first extension pipe 4100 and pressure of the steam supplied to the third extension pipe 4200 to be different from each other. For example, the pressure of the additional steam supplied to the first extension pipe 4100 may be higher than that of the additional steam supplied to the third extension pipe 4200, thereby reducing or minimizing overheating phenomenon due to windage loss.

The reason why the pressure of the additional steam supplied to the first extension pipe 4100 is high is to maintain sufficient pressure energy to be supplied to the last-stage turbine of the high-pressure turbine 110.

The apparatus for reducing or preventing windage loss of steam turbines includes a return pipe 50 of which one end is connected to the outlet stage 112 of the high-pressure turbine 110 and the other end is connected to the tank unit 300, and through which steam supplied to the inlet stage 111 of the high-pressure turbine 110 is drained.

The steam supplier 4000 includes a first control valve 4400 positioned at any extended position of the first and third extension pipes 4100 and 4200 and of which an opening degree is controlled by the controller 600.

The first control valve 4400 is operated so that the opening degree thereof is increased or decreased depending on an amount of supplied additional steam, and thus is operated so that the additional steam is supplied under optimal condition according to the internal temperature and pressure of the high-pressure turbine 110.

According to the embodiments of the present invention, it is possible to stably reduce or prevent the windage loss phenomenon that may be generated when the steam turbine including the heat supply and storage tank is started-up, thereby reducing or minimizing damage to the high-pressure turbine.

According to the embodiments of the present invention, since the optimal amount of additional steam supplied to the high-pressure turbine may be calculated and supplied, it is possible to economically operate the turbine unit without operating the condenser.

According to the embodiments of the present invention, since additional steam may be supplied to the inlet stage and the outlet stage of the high-pressure turbine, respectively, it is possible to reduce or minimize a rise in temperature of the high-pressure turbine.

The breadth and scope of the present disclosure should not be limited by any of the above-described exemplary embodiments, but should be defined only in accordance with the following claims.

## Claims

1. An apparatus, comprising:
a turbine unit (100) adapted to be supplied with steam including a high-pressure turbine (110), a medium-pressure turbine (120), and a low-pressure turbine (130);
a condenser (200) that receives steam from the low-pressure turbine (130);
a tank (300) in which steam generated at the time of operation of the turbine unit (100) converts into condensed water and is stored;
a steam supplier (400) that supplies additional steam to an inlet stage of the high-pressure turbine (110);
a sensor (500) that senses the steam temperature at the outlet stage (112) of the high-pressure turbine (110) and internal steam pressure; and
a controller (600) configured to control an amount of steam supplied by the steam supplier (400) based on temperature or pressure data sensed by the sensor (500), **characterized in that** the steam supplier (400) includes an extension pipe (410) that extends between a second-stage turbine and a third-stage turbine of the high-pressure turbine (110), a steam generator (420) that supplies steam to the extension pipe (410), and a first control valve (430) coupled to the extension pipe (410), an opening degree of the first control valve (430) being controlled by the controller (600).

2. The apparatus of claim 1, wherein the extension pipe (410) is arranged to supply steam at a side of a turbine blade (114) of the high-pressure turbine (110) and orthogonal to a shaft of the high-pressure turbine (110).

3. The apparatus of claim 1, wherein an end formed of the extension pipe (410) includes a nozzle.

4. The apparatus of claim 1, wherein the extension pipe (410) is arranged to supply steam in a rotation direction of the high-pressure turbine (110).

5. The apparatus of claim 1, wherein the extension pipe (410) includes
a first extension pipe (410) that extends toward a turbine blade (114) in order to supply steam in a rotation direction of the high-pressure turbine (110), and
a second extension pipe (410) positioned opposite to the first extension pipe (410) to supply steam in the rotation direction of the turbine blade (114).

6. The apparatus of claim 1, further comprising a return pipe (50) through which the steam supplied to the inlet stage of the high-pressure turbine (110) is drained, a first end of the return pipe (50) being coupled to the outlet stage (112) of the high-pressure turbine (110) and a second end of the return pipe (50) being coupled to the tank (300).

7. The apparatus of claim 6, wherein the return pipe (50) includes a second control valve (52) that controls an amount of drained steam.

8. The apparatus of claim 1, wherein the controller (600) is configured to control pressure of the steam supplied by the steam supplier (400) based on pressure data according to a pressure drop between the second-stage turbine and the third-stage turbine.

9. The apparatus of claim 1, wherein the steam supplier (400) includes a pressure controller (700) configured to supply the additional steam to the high-pressure turbine (110) at a pressure determined by the controller (600).

10. The apparatus of claim 1, wherein the tank (300) stores steam drained from the medium-pressure turbine (120).

## Patentansprüche

1. Vorrichtung, umfassend:
eine Turbineneinheit (100), die ausgebildet ist, Dampf zugeführt zu bekommen und die eine Hochdruckturbine (110), eine Mitteldruckturbine (120) und eine Niederdruckturbine (130) umfasst;
einen Verflüssiger (200), der Dampf von der Niederdruckturbine (130) erhält;
einen Tank (300), in welchem Dampf, der während der Betriebszeit der Turbineneinheit (100) erzeugt wird, in kondensiertes Wasser übergeht und gespeichert wird;
einen Dampfzuführer (400), der einer Einlassstufe der Hochdruckturbine (110) zusätzlichen Dampf zuführt;
einen Sensor (500), der die Dampftemperatur an der Auslassstufe (112) der Hochdruckturbine (110) und den internen Dampfdruck erfasst; und
eine Steuerung (600), die eingerichtet ist, eine Menge an Dampf, die von dem Dampferzeuger bereitgestellt wird, basierend auf Temperatur- oder Druckdaten, die von dem Sensor (500) erfasst werden, zu steuern,
**dadurch gekennzeichnet, dass** der Dampfzuführer (400) ein Verlängerungsrohr (410), das sich zwischen einer Turbine einer zweiten Stufe und einer Turbine einer dritten Stufe der Hochdruckturbine (110) erstreckt, einen Dampferzeuger (420), der dem Verlängerungsrohr Dampf zuführt, und ein erstes Steuerventil (430), das mit dem Verlängerungsrohr (410) gekoppelt ist, umfasst, wobei ein Öffnungsgrad des ersten Steuerventils (430) von der Steuerung (600) gesteuert wird.

2. Vorrichtung gemäß Anspruch 1, wobei das Verlängerungsrohr (410) eingerichtet ist, um Dampf an einer Seite einer Turbinenschaufel (114) der Hochdruckturbine (110) und orthogonal zu einer Welle der Hochdruckturbine (110) bereitzustellen.

3. Vorrichtung gemäß Anspruch 1, wobei ein Ende des Verlängerungsrohrs (410) eine Düse umfasst.

4. Vorrichtung gemäß Anspruch 1, wobei das Verlängerungsrohr (410) eingerichtet ist, um Dampf in einer Drehrichtung der Hochdruckturbine (110) bereitzustellen.

5. Vorrichtung gemäß Anspruch 1, wobei das Verlängerungsrohr (410)
ein erstes Verlängerungsrohr (410), das sich in Richtung einer Turbinenschaufel (114) erstreckt, um Dampf in einer Drehrichtung der Hochdruckturbine (110) bereitzustellen, und
ein zweites Verlängerungsrohr (410), das gegenüber dem ersten Verlängerungsrohr angeordnet ist, um Dampf in der Drehrichtung der Turbinenschaufel (114) bereitzustellen, umfasst.

6. Vorrichtung gemäß Anspruch 1, ferner umfassend ein Rücklaufrohr (50), durch welches der Dampf, der der Einlassstufe der Hochdruckturbine (110) zugeführt wird, abgelassen wird, wobei ein erstes Ende des Rücklaufrohrs (50) mit der Auslassstufe (112) der Hochdruckturbine (110) gekoppelt ist und wobei ein zweites Ende des Rücklaufrohrs (50) mit dem Tank (300) gekoppelt ist.

7. Vorrichtung gemäß Anspruch 6, wobei das Rücklaufrohr (50) ein zweites Steuerventil (52) umfasst, das eine Menge an abgelassenem Dampf steuert.

8. Vorrichtung gemäß Anspruch 1, wobei die Steuerung (600) eingerichtet ist, um einen Druck des Dampfes, der von dem Dampfzuführer (400) bereitgestellt wird, basierend auf Druckdaten entsprechend einem Druckabfall zwischen der Turbine der zweiten Stufe und der Turbine der dritten Stufe zu steuern.

9. Vorrichtung gemäß Anspruch 1, wobei der Dampfzuführer (400) eine Drucksteuerung (700) umfasst, die eingerichtet ist, der Hochdruckturbine (110) den zusätzlichen Dampf unter einem von der Steuerung (600) bestimmten Druck zuzuführen.

10. Vorrichtung gemäß Anspruch 1, wobei der Tank (300) Dampf speichert, der von der Mitteldruckturbine (120) abgelassen wird.

## Revendications

1. Dispositif, comprenant :
une unité de turbine (100) adaptée pour être alimentée en vapeur, comprenant une turbine haute pression (110), une turbine moyenne pression (120) et une turbine basse pression (130) ;
un condensateur (200) recevant de la vapeur de la turbine basse pression (130) ;
un réservoir (300) où la vapeur générée pendant le fonctionnement de l'unité de turbine (100) est convertie en eau de condensation et est stockée ;
une source de vapeur (400) refoulant de la vapeur additionnelle vers un étage d'entrée de la turbine haute pression (110) ;
un capteur (500) détectant la température de la vapeur à l'étage de sortie (112) de la turbine haute pression (110) et la pression de vapeur interne ; et
un contrôleur (600) prévu pour commander une quantité de vapeur refoulée par la source de vapeur (400) sur la base de données de température ou de pression détectées par le capteur (500), **caractérisé en ce que** la source de vapeur (400) comprend une conduite d'extension (410) s'étendant entre une turbine de deuxième étage et une turbine de troisième étage de la turbine haute pression (110), un générateur de vapeur (420) refoulant de la vapeur vers la conduite d'extension (410), et une première vanne de régulation (430) raccordée à la conduite d'extension (410), le degré d'ouverture de la première vanne de régulation (430) étant commandé par le contrôleur (600).

2. Dispositif selon la revendication 1, où la conduite d'extension (410) est disposée de manière à refouler de la vapeur sur un côté d'une aube (114) de la turbine haute pression (110) et orthogonalement à un arbre de la turbine haute pression (110).

3. Dispositif selon la revendication 1, où une extrémité formée par la conduite d'extension (410) présente une buse.

4. Dispositif selon la revendication 1, où la conduite d'extension (410) est disposée de manière à refouler de la vapeur dans un sens de rotation de la turbine haute pression (110).

5. Dispositif selon la revendication 1, où la conduite d'extension (410) comprend une première conduite d'extension (410) s'étendant vers une aube (114) de turbine pour refouler de la vapeur dans un sens de rotation de la turbine haute pression (110), et
une deuxième conduite d'extension (410) disposée à l'opposé de la première conduite d'extension (410) pour refouler de la vapeur dans le sens de rotation de l'aube (114) de turbine.

6. Dispositif selon la revendication 1, comprenant en outre une conduite de retour (50) par laquelle est évacuées la vapeur refoulée vers l'étage d'entrée de la turbine haute pression (110), une première extrémité de la conduite de retour (50) étant raccordée à l'étage de sortie (112) de la turbine haute pression (110) et une deuxième extrémité de la conduite de retour (50) étant raccordée au réservoir (300).

7. Dispositif selon la revendication 6, où la conduite de retour (50) comprend une deuxième vanne de régulation (52) commandant une quantité de vapeur évacuée.

8. Dispositif selon la revendication 1, où le contrôleur (600) est prévu pour commander la pression de la vapeur refoulée par la source de vapeur (400) sur la base de données de pression en fonction d'une chute de pression entre la turbine de deuxième étage et la turbine de troisième étage.

9. Dispositif selon la revendication 1, où la source de vapeur (400) comprend un régulateur de pression (700) prévu pour refouler de la vapeur additionnelle vers la turbine haute pression (110) à une pression déterminée par le contrôleur (600).

10. Dispositif selon la revendication 1, où le réservoir (300) stocke la vapeur évacuée de la turbine moyenne pression (120).
